(19) Europäisches Patentamt / European Patent Office / Office européen des brevets

(11) **EP 3 593 148 B1**

(12) **FASCICULE DE BREVET EUROPEEN**

(45) Date de publication et mention de la délivrance du brevet:
**07.04.2021 Bulletin 2021/14**

(21) Numéro de dépôt: **18708934.7**

(22) Date de dépôt: **22.02.2018**

(51) Int Cl.:
*G01P 5/24* *(2006.01)*    *G01P 21/02* *(2006.01)*
*G01F 1/66* *(2006.01)*

(86) Numéro de dépôt international:
**PCT/EP2018/054448**

(87) Numéro de publication internationale:
**WO 2018/162249 (13.09.2018 Gazette 2018/37)**

(54) **PROCEDE, COMPTEUR DE FLUIDE, PROGRAMME D'ORDINATEUR ET MOYENS DE STOCKAGE DE MESURE D'UNE VITESSE D'UN FLUIDE**

VERFAHREN, FLÜSSIGKEITSMESSGERÄT, COMPUTERPROGRAMM UND SPEICHERMITTEL ZUR MESSUNG EINER GESCHWINDIGKEIT EINES FLUIDS

METHOD, FLUID METER, COMPUTER PROGRAM AND STORAGE MEANS FOR MEASURING A SPEED OF A FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.03.2017 FR 1751989**

(43) Date de publication de la demande:
**15.01.2020 Bulletin 2020/03**

(73) Titulaire: **Sagemcom Energy & Telecom SAS
92500 Rueil-Malmaison (FR)**

(72) Inventeur: **TEBOULLE, Henri
92500 Rueil Malmaison (FR)**

(74) Mandataire: **Lavaud, Thomas et al
Cabinet Boettcher
16, rue Médéric
75017 Paris (FR)**

(56) Documents cités:
**JP-A- 2003 302 416    JP-A- 2013 246 065
US-A- 5 117 698**

**Description**

L'invention concerne le domaine des procédés de mesure d'une vitesse d'un fluide.

ARRIERE PLAN DE L'INVENTION

Un compteur de fluide à ultrason utilise classiquement, pour mesurer un débit d'un fluide circulant dans un tuyau, un dispositif de mesure de la vitesse du fluide par émission et réception de signaux ultrasonores de mesure.

Un tel dispositif de mesure comporte un conduit, raccordé au tuyau, dans lequel circule le fluide. Pour mesurer la vitesse du fluide, on émet dans le conduit un signal ultrasonore de mesure parcourant un trajet de longueur définie, on mesure les temps de trajet mis par le signal ultrasonore de mesure pour parcourir le trajet de longueur définie d'amont en aval et d'aval en amont, et on estime la vitesse du fluide à partir notamment de la longueur définie et de la différence entre les temps de trajet.

Dans le cas des compteurs d'eau, trois types de dispositif de mesure sont principalement utilisés.

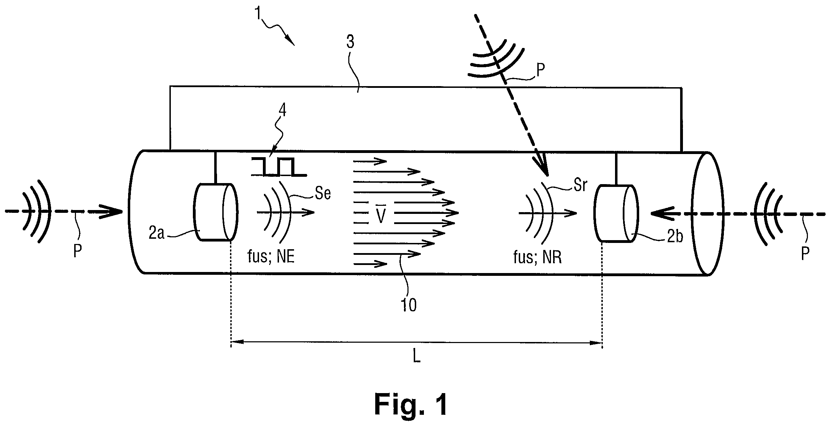

Un premier type de dispositif de mesure 1, parfois désigné par les termes anglais *classical pipe,* est visible sur la figure 1. Le premier type de dispositif de mesure 1 comporte un premier transducteur 2a, un deuxième transducteur 2b, et un module de mesure 3 relié au premier transducteur 2a et au deuxième transducteur 2b.

Le premier transducteur 2a et le deuxième transducteur 2b sont appairés. Le premier transducteur 2a et le deuxième transducteur 2b sont par exemple des transducteurs piézoélectriques.

Le trajet de longueur définie est donc un trajet rectiligne de longueur L entre le premier transducteur 2a et le deuxième transducteur 2b.

Le premier transducteur 2a émet un signal ultrasonore de mesure Se. Le signal ultrasonore de mesure Se est par exemple généré à partir d'un signal rectangulaire 4. Le deuxième transducteur 2b reçoit un signal ultrasonore Sr résultant de la propagation dans le fluide du signal ultrasonore de mesure Se.

Le module de mesure 3 estime ainsi un temps de trajet Tab mis par le signal ultrasonore de mesure Se pour parcourir le trajet de longueur définie d'amont en aval.

De même, le deuxième transducteur 2b émet un signal ultrasonore de mesure qui est reçu par le premier transducteur 2a. Le module de mesure 3 estime ainsi un temps de trajet Tba mis par le signal ultrasonore de mesure pour parcourir le trajet de longueur définie d'aval en amont.

Le module de mesure 3 calcule alors la vitesse moyenne $\overline{V}$ du fluide en utilisant la formule :
$\Delta T = Tba - Tab = (\overline{V}.2L)/c^2$, où c est la vitesse d'une onde ultrasonore dans l'eau. La vitesse d'une onde ultrasonore dans l'eau est égale à environ 1500m/s, et dépend de la température.

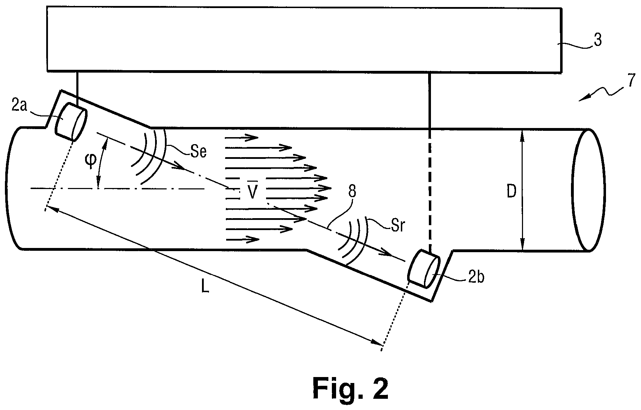

Un deuxième type de dispositif de mesure 7, parfois désigné par les termes anglais *free pipe,* est visible sur la figure 2. Le premier transducteur 2a et le deuxième transducteur 2b sont cette fois situés de part et d'autre du conduit, à l'extérieur du conduit. Le deuxième type de dispositif de mesure 7 présente donc l'avantage de ne pas être intrusif.

Le trajet de longueur définie est à nouveau un trajet rectiligne 8 de longueur L entre le premier transducteur 2a et le deuxième transducteur 2b.

Le module de mesure 3 calcule la vitesse moyenne $\overline{V}$ du fluide en utilisant la formule :

$$\Delta T = Tba - Tab = (\overline{V}.2L\cos\varphi)/c^2.$$

Il convient, dans le cas du deuxième type de dispositif de mesure 7, d'avoir un $\cos\varphi$ important et donc un angle $\varphi$ très proche de 0. Il faut donc soit réduire le diamètre D du conduit, soit augmenter la longueur L. La réduction du diamètre D présente un risque de baisse de charge de l'eau dans le tuyau, alors que l'augmentation de la longueur L tend à réduire le rapport de signal sur bruit des mesures, du fait de la réduction du niveau du signal ultrasonore reçu Sr.

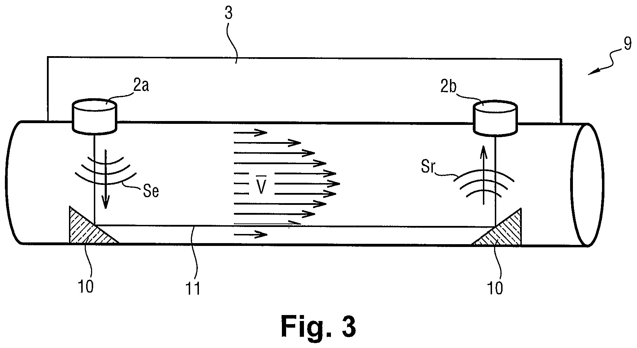

Un troisième type de dispositif de mesure 9, parfois désigné par le terme anglais *U-shape,* est visible sur la figure 3. Le troisième type de dispositif de mesure 9 vise à résoudre les inconvénients précités. Le troisième type de dispositif 9 est une solution peu intrusive qui utilise des réflecteurs 10 (ici, des miroirs orientés à 45°) permettant de résoudre le problème du $\cos\varphi$.

Le trajet de longueur définie est un trajet 11 en forme de U entre le premier transducteur 2a et le deuxième transducteur 2b.

Il peut arriver que des perturbations P (visibles sur la figure 1), par exemple des anomalies ou des tentatives de fraude, dégradent le fonctionnement du dispositif de mesure d'un compteur de fluide.

Une anomalie est ici définie comme étant un phénomène involontaire résultant par exemple d'un problème de fonctionnement (par exemple du compteur ou du réseau) ou d'un problème d'écoulement du fluide.

Une tentative de fraude est ici définie comme étant un phénomène volontaire et est réalisée par exemple à l'aide d'un générateur ultrasonore. Une tentative de fraude peut être réalisée depuis l'extérieur du tuyau et du conduit, mais aussi depuis l'intérieur du tuyau, par exemple en positionnant un générateur ultrasonore étanche dans un filtre antiparticules situé en aval du compteur et à proximité de celui-ci.

Le document JP 2013 246065 A enseigne un procédé de mesure ultrasonique de l'art antérieur, qui est destiné à mesurer la vitesse d'un fluide.

## OBJET DE L'INVENTION

L'invention a pour objet de rendre robuste aux anomalies et aux tentatives de fraude un dispositif de mesure de vitesse de fluide ultrasonore.

## RESUME DE L'INVENTION

En vue de la réalisation de ce but, on propose un procédé de mesure d'une vitesse d'un fluide, comportant des phases de mesure qui comprennent chacune les étapes :

- de générer une pluralité de fréquences d'émission pseudo-aléatoires ;
- pour chaque fréquence d'émission pseudo-aléatoire, d'émettre dans le fluide des signaux ultrasonores de mesure à ladite fréquence d'émission pseudo-aléatoire qui parcourent un trajet de longueur définie ;
- de recevoir les signaux ultrasonores de mesure après que ceux-ci aient parcouru le trajet de longueur définie ;
- pour chaque signal ultrasonore de mesure reçu, de produire une mesure de temps de trajet représentative d'un temps mis par le signal ultrasonore de mesure reçu pour parcourir le trajet de longueur définie, de manière à produire pour chaque fréquence d'émission pseudo-aléatoire un nombre prédéfini de mesures de temps de trajet ;
- pour chaque fréquence d'émission pseudo-aléatoire, d'évaluer une précision des mesures de temps de trajet produites pour ladite fréquence d'émission pseudo-aléatoire ;
- d'utiliser, pour évaluer la vitesse du fluide, les mesures de temps de trajet produites pour la fréquence d'émission pseudo-aléatoire qui présente la plus grande précision.

En générant une pluralité de fréquences d'émission pseudo-aléatoires et en sélectionnant la fréquence d'émission pseudo-aléatoire la plus précise, on assure que la fréquence d'émission pseudo-aléatoire sélectionnée est suffisamment éloignée de la fréquence d'une éventuelle perturbation. On rend ainsi la mesure de vitesse du fluide robuste aux perturbations.

On propose aussi un compteur de fluide à ultrason comportant un premier transducteur, un deuxième transducteur, et des moyens de traitement agencés pour mettre en œuvre le procédé de mesure qui vient d'être décrit.

On propose aussi un programme d'ordinateur comprenant des instructions pour mettre en œuvre, par un compteur de fluide à ultrason, le procédé de mesure qui vient d'être décrit.

On propose de plus des moyens de stockage qui stockent un programme d'ordinateur comprenant des instructions pour mettre en œuvre, par un compteur de fluide à ultrason, le procédé de mesure qui vient d'être décrit.

D'autres caractéristiques et avantages de l'invention ressortiront à la lecture de la description qui suit d'un mode de réalisation particulier non limitatif de l'invention.

## BREVE DESCRIPTION DES DESSINS

Il sera fait référence aux dessins annexés, parmi lesquels :

- la figure 1 représente un dispositif de mesure ultrasonore d'un premier type ;
- la figure 2 représente un dispositif de mesure ultrasonore d'un deuxième type ;
- la figure 3 représente un dispositif de mesure ultrasonore d'un troisième type ;
- la figure 4 représente un signal ultrasonore de mesure reçu après qu'il ait parcouru un trajet de longueur définie ;
- la figure 5 représente des étapes d'une phase de mesure du procédé de mesure selon l'invention ;
- la figure 6 est un graphique sur lequel sont représentés des points de mesure de temps de trajet ;
- la figure 7 représente des étapes d'une phase de détection du procédé de mesure selon l'invention.

## DESCRIPTION DETAILLEE DE L'INVENTION

Le procédé de mesure d'une vitesse d'un fluide selon l'invention est ici mis en œuvre dans un compteur d'eau à ultrason.

Le compteur d'eau à ultrason comporte un conduit dans lequel circule de l'eau fournie par un réseau de distribution à une installation, ainsi qu'un dispositif de mesure de la vitesse de l'eau tel que celui représenté sur la figure 1.

L'eau circule dans le conduit d'amont en aval, comme cela est indiqué par le sens des flèches 10 visibles sur la figure 1.

Le dispositif de mesure comporte le module de mesure 3, le premier transducteur 2a et le deuxième transducteur 2b.

Le module de mesure 3 comprend des moyens de traitement comportant un composant de traitement intelligent adapté à exécuter des instructions d'un programme pour mettre en œuvre les différentes étapes du procédé de mesure selon l'invention. Le composant intelligent est ici un microcontrôleur, mais pourrait être un composant différent, par exemple un processeur ou un FPGA.

Les moyens de traitement pilotent le premier transducteur 2a et le deuxième transducteur 2b.

Le premier transducteur 2a et le deuxième transducteur 2b sont appairés. Le premier transducteur 2a et le deuxième transducteur 2b sont ici des transducteurs piézoélectriques.

Le premier transducteur 2a et le deuxième transducteur 2b remplissent chacun successivement la fonction d'un émetteur de signaux ultrasonores de mesure, et la fonction d'un récepteur de signaux ultrasonores de mesure.

Les moyens de traitement fournissent ainsi à l'émetteur des signaux électriques que celui-ci transforme en signaux ultrasonores de mesure. Les signaux électriques sont ici des signaux rectangulaires 4. Les moyens de traitement acquièrent les signaux ultrasonores de mesure Sr reçus par le récepteur.

L'émetteur émet les signaux ultrasonores de mesure Se à une fréquence d'émission fus. La fréquence fus est ici comprise entre 900kHz et 4MHz.

Les signaux ultrasonores de mesure Se parcourent ainsi, entre le premier transducteur 2a et le deuxième transducteur 2b, un trajet de longueur définie L d'amont en aval et d'aval en amont. Le trajet de longueur définie est ici un trajet rectiligne entre le premier transducteur 2a et le deuxième transducteur 2b.

Sur la figure 1, on a représenté le premier transducteur 2a remplissant la fonction d'un émetteur et le deuxième transducteur 2b remplissant la fonction d'un récepteur. Le signal ultrasonore de mesure Se parcourt donc le trajet de longueur définie d'amont en aval. Le signal ultrasonore de mesure Se est émis par l'émetteur avec un niveau NE. Le signal ultrasonore de mesure reçu Sr est reçu par le récepteur avec un niveau NR inférieur au niveau NE.

On décrit tout d'abord le principe général utilisé pour évaluer la vitesse de l'eau.

Les moyens de traitement produisent une mesure de temps de trajet représentative d'un temps mis par le signal ultrasonore de mesure Se pour parcourir le trajet de longueur prédéfinie d'amont en aval, puis produisent une mesure de temps de trajet représentative d'un temps mis par le signal ultrasonore de mesure Se pour parcourir le trajet de longueur prédéfinie d'aval en amont, puis enfin évaluent la vitesse de l'eau en fonction de ces temps de trajet.

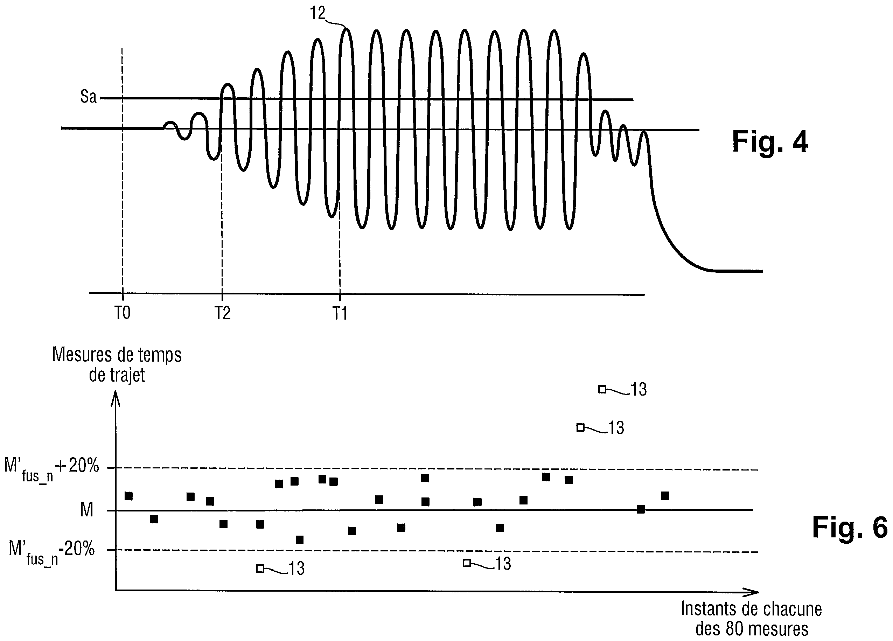

La figure 4 représente un signal ultrasonore de mesure reçu Sr, qui est reçu par le récepteur après avoir parcouru le trajet de longueur définie.

Le récepteur active la réception à un moment T0, synchronisé avec l'émission du signal ultrasonore de mesure Se. L'appairage de l'émetteur et du récepteur rend possible cette synchronisation.

La mesure de temps de trajet est obtenue à partir de la détermination d'un moment de survenue T1 d'un lobe prédéterminé 12 du signal ultrasonore de mesure reçu Sr.

Le moment de survenue T1 est ici l'instant où survient un front montant du lobe prédéterminé 12. Le moment de survenue T1 est mesuré par une méthode du type « Zéro Crossing ».

Le lobe prédéterminé 12 est un $j^{ième}$ lobe du signal ultrasonore de mesure reçu Sr après qu'une amplitude du signal ultrasonore de mesure reçu Sr ait dépassé, au temps T2, un seuil d'amplitude prédéterminé Sa. Le $j^{ième}$ lobe est en l'occurrence ici le quatrième lobe.

La vitesse de l'eau est ensuite évaluée par le module de mesure 3 en fonction d'une mesure de temps de trajet d'amont en aval et d'une mesure de temps de trajet d'aval en amont.

La vitesse de l'eau est proportionnelle à une différence entre la mesure de temps de trajet d'aval en amont et la mesure de temps de trajet d'amont en aval.

On note que la vitesse de l'eau mesurée est ici une vitesse moyenne de l'eau dans le diamètre du conduit, la vitesse des masses d'eau étant en effet différente au centre du conduit et à proximité des parois du conduit.

Le procédé de mesure selon l'invention comporte des phases de mesure, répétées à intervalles réguliers.

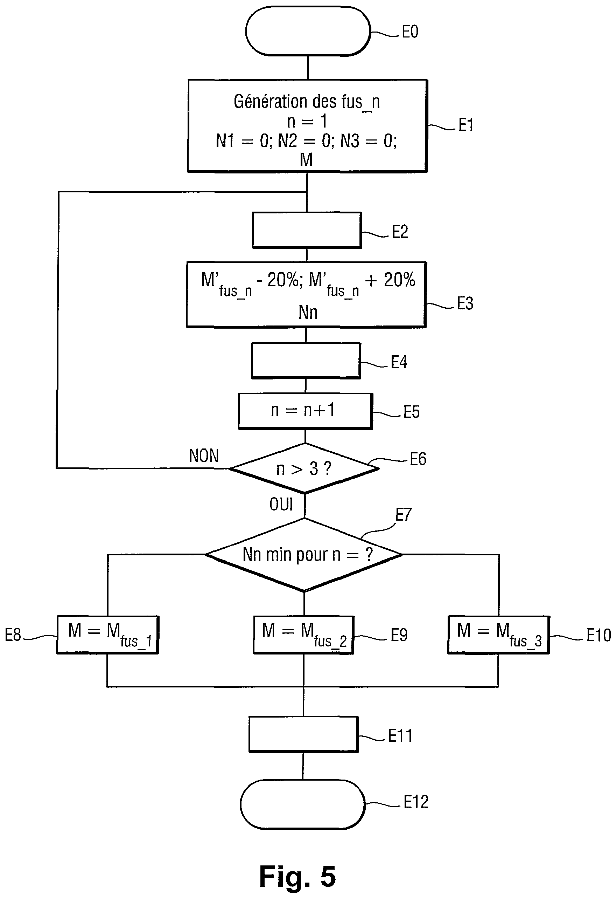

On décrit, en référence à la figure 5, les différentes étapes que comporte une phase de mesure.

Suite à une étape de départ (étape E0), la phase de mesure comporte une étape consistant à générer une pluralité de fréquences d'émission pseudo-aléatoires fus_n, n variant entre 1 et 3 (étape E1). On génère donc en l'occurrence trois fréquences d'émission pseudo-aléatoires tus_1, fus_2, fus_3.

Les trois fréquences d'émission pseudo-aléatoires fus_n sont comprises entre une fréquence minimale fmin et une fréquence maximale fmax. La différence entre fmax et fmin est ici égale à 100kHz. Par ailleurs, comme on l'a vu plus tôt, la fréquence minimale fmin et la fréquence maximale fmax sont elles-mêmes comprises entre 900kHz et 4MHz.

Les trois fréquences d'émission pseudo-aléatoires fus_n sont générées ici en utilisant un compteur sur 32 bits des cycles du microcontrôleur des moyens de traitement.

Les fréquences d'émission pseudo-aléatoires fus_n sont ici chacune égales à :

$$fus\_n = fmin + Kn*1kHz,$$

où Kn est une variable pseudo-aléatoire égale aux 7 bits de poids faible du compteur.

Il aurait été possible de générer les trois fréquences d'émission pseudo-aléatoires fus_n de manière différente, par exemple en utilisant un polynôme générateur. Le polynôme générateur est alors mis en œuvre avec un circuit comprenant des bascules D. Toutes les entrées des bascules D sont initialisées à 0. On utilise 7 bits consécutifs en sortie du circuit pour générer les variables pseudo-aléatoires Kn évoqués plus tôt.

Un exemple de polynôme générateur avantageusement utilisé est :

$$1 + x^{-3} + x^{-11}.$$

Les trois fréquences d'émission pseudo-aléatoires fus_n sont espacées entre elles d'au moins un écart de fréquence prédéfini. L'écart de fréquence prédéfini est compris entre 5kHz et 50kHz, et est ici égal à 10kHz. On expliquera plus bas l'intérêt de cet écart de fréquence prédéfini. Lorsque deux fréquences d'émission pseudo-aléatoires fus_n sont générées sans que l'écart de fréquence prédéfini ne soit respecté, l'une des fréquences d'émission pseudo-aléatoires fus_n est supprimée et une nouvelle fréquence d'émission pseudo-aléatoire fus_n est générée.

Les trois fréquences d'émission pseudo-aléatoires fus_n sont ainsi générées consécutivement.

La première fréquence d'émission pseudo-aléatoire utilisée est la fréquence d'émission pseudo-aléatoire fus_1 (c'est à dire que n=1).

Les trois variables N1, N2 et N3 sont initialisées à 0. La variable M est aussi initialisée à 0. On comprendra plus bas le rôle de ces variables.

Un nombre prédéfini de signaux ultrasonores de mesure Se à la fréquence d'émission pseudo-aléatoire fus_1 est émis par l'émetteur, qui est en l'occurrence le premier transducteur 2a. Le nombre prédéfini est ici égal à 80.

Les signaux ultrasonores de mesure Se parcourent donc le trajet de longueur définie d'amont en aval.

Les signaux ultrasonores de mesure Se sont reçus par le récepteur, qui est donc en l'occurrence le deuxième transducteur 2b. Pour chaque signal ultrasonore de mesure reçu Sr, un temps de trajet est estimé (en l'occurrence, un temps de trajet d'amont en aval).

Un nombre de mesures de temps de trajet, égal au nombre prédéfini, est alors généré en utilisant la méthode de mesure de temps de trajet décrite plus tôt. 80 mesure de temps de trajet sont donc générées (étape E2).

On évalue alors, pour la fréquence d'émission pseudo-aléatoire fus_1, une précision des mesures de temps de trajet produites pour ladite fréquence d'émission pseudo-aléatoire fus_1.

En référence à la figure 6, l'évaluation de la précision des mesures de temps de trajet consiste tout d'abord à calculer une moyenne $M'_{fus\_1}$ des mesures de temps de trajet, puis à déterminer un nombre de mesures de temps de trajet imprécises 13 situées à l'extérieur d'une plage $[M'_{fus\_1}-X ; M'_{fus\_1}+X]$ (étape E3).

X est un pourcentage prédéterminé de la moyenne $M'_{fus\_1}$.

Le pourcentage prédéterminé est le même quelle que soit la valeur de l'indice n.

Pour chaque fus_n, X est avantageusement compris entre 3% et 30% de $M'_{fus\_n}$. X est ici égal à 20% de $M'_{fus\_n}$.

On voit sur la figure 6 que 4 mesures de temps de trajet imprécises sont situées à l'extérieur de la plage $[M'_{fus\_1}-20\% ; M'_{fus\_1}+20\%]$.

Le nombre N1, qui correspond au nombre de mesures de temps de trajet imprécises 13 pour la fréquence d'émission pseudo-aléatoire fus1, prend donc la valeur 4.

On élimine ensuite les mesures de temps de trajet imprécises 13 et on calcule $M_{fus\_1}$, qui est la moyenne des mesures de temps de trajet à l'intérieur de la plage $[M'_{fus\_1}-20\% ; M'_{fus\_1}+20\%]$ (étape E4).

Puis, l'indice n est incrémenté : n=n+1 (étape E5).

La valeur prise par n est donc n=2.

Une étape de comparaison compare la valeur de n avec 3 (étape E6). Tant que n est inférieur ou égal à 3, les étapes E2 à E5 sont à répétées.

Les étapes E2 à E5 sont donc réalisées avec la fréquence d'émission pseudo-aléatoire fus_2, puis avec la fréquence d'émission pseudo-aléatoire fus_3.

On obtient donc les valeurs $M'_{fus\_2}$, N2, $M_{fus\_2}$, puis les valeurs $M'_{fus\_3}$, N3, $M_{fus\_3}$.

Lorsque n devient supérieur à 3, l'étape E7 succède à l'étape E6. Au cours de l'étape E7, on détermine pour quelle valeur k le nombre Nk est minimal. En d'autres termes, on détermine la fréquence d'émission pseudo-aléatoire fus_k associée au plus faible nombre de mesures de temps de trajet imprécises 13, et donc la fréquence d'émission pseudo-aléatoire fus_k qui présente la plus grande précision.

Si k est égal à 1, on pose $M=M_{fus\_1}$ (étape E8).

Si k est égal à 2, on pose $M=M_{fus\_2}$ (étape E9).

Si k est égal à 3, on pose $M=M_{fus\_3}$ (étape E10).

La valeur M est donc égale à la moyenne $M_{fus\_k}$ des mesures de temps de trajet à l'intérieur de la plage $[M'_{fus\_k}-20\%; M'_{fus\_k}+20\%]$, fus_k étant la fréquence d'émission qui présente la plus grande précision.

Les étapes qui viennent d'être décrites sont réalisées à nouveau, en utilisant cette fois le deuxième transducteur 2b comme émetteur et le premier transducteur 2a comme récepteur. Le temps de trajet estimé est alors un temps de trajet d'aval en amont.

La vitesse moyenne de l'eau est alors évaluée en utilisant la valeur M comme temps de trajet moyen pour évaluer la vitesse de l'eau d'amont en aval et d'aval en amont (étape E11). Une compensation en température est réalisée, car la vitesse du son dans l'eau dépend de la température.

La phase de mesure s'achève alors (étape E12).

Le procédé de mesure selon l'invention est donc robuste aux perturbations, c'est à dire aux anomalies involontaires ou aux tentatives de fraude volontaires, susceptibles de dégrader le fonctionnement du dispositif de mesure.

Dans le cas où une anomalie se produit et où cette anomalie crée des interférences à l'une des fréquences d'émission pseudo-aléatoires fus_n, cette fréquence d'émission pseudo-aléatoire fus_n sera associée à une mauvaise précision, et le procédé de mesure utilisera une autre fréquence d'émission pseudo-aléatoire fus_n pour estimer la vitesse de l'eau. Une telle anomalie résulte par exemple d'un tourbillon dans l'eau et de la présence de bulles d'air générées par le tourbillon.

De même, si un signal ultrasonore est émis par un générateur ultrasonore à des fins frauduleuses, le procédé de mesure utilisera une fréquence d'émission pseudo-aléatoire fus_n différente de celle utilisée par le générateur ultrasonore.

On note que l'utilisation de l'écart de fréquence prédéfini entre deux fréquences d'émission pseudo-aléatoires permet d'assurer que les fréquences d'émission pseudo-aléatoires sont éloignées les unes des autres. Ainsi, si l'une des fréquences d'émission pseudo-aléatoires est perturbée, les autres ne le seront pas.

On note aussi que, comme les fréquences d'émission sont pseudo-aléatoires, deux compteurs d'eau qui utilisent le procédé de mesure selon l'invention ne se perturbent pas l'un et l'autre. Les deux compteurs n'émettent en effet jamais simultanément aux mêmes fréquences, et ne sont pas synchronisés.

Outre les phases de mesure, le procédé de mesure selon l'invention comporte des phases de détection qui permettent de détecter la survenue d'une perturbation et de déterminer si la perturbation provient d'une anomalie ou d'une tentative de fraude.

Chaque phase de détection est répétée à intervalles réguliers, périodiques ou non, entre deux phases de mesure. La phase de détection consiste à rendre programmable le seuil d'amplitude prédéterminé Sa évoqué plus tôt pour détecter la présence d'une perturbation.

Le seuil d'amplitude prédéterminé programmable est ainsi un seuil de détection S_n susceptible de prendre une pluralité de valeurs prédéfinies comprises entre un seuil de détection maximal S0 et un seuil de détection minimal S_N-1. Les valeurs prédéfinies du seuil de détection S_n sont chacune référencées par l'indice n et présentent des valeurs décroissantes relativement aux indices n.

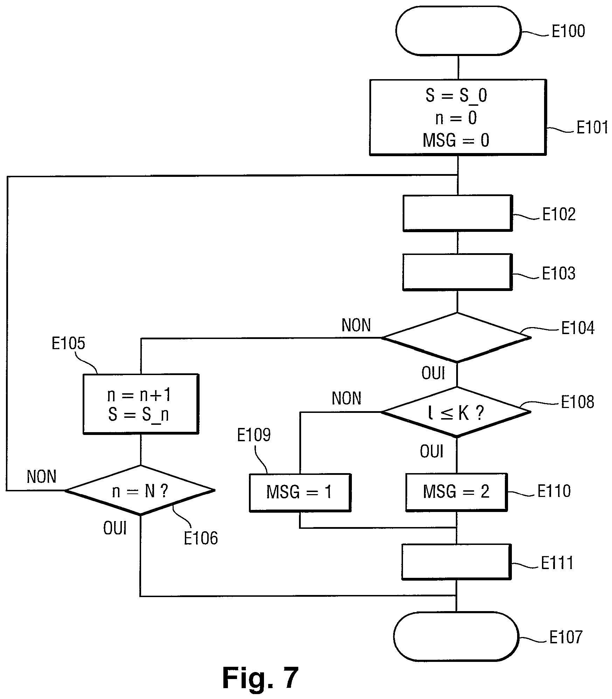

On décrit maintenant plus en détail, en référence à la figure 7, les différentes étapes que comporte une phase de détection.

Suite à une étape de départ (étape E100), la phase de détection comporte une étape d'initialisation (étape E101) consistant à initialiser l'indice n à 0, une valeur courante du seuil de détection S_n au seuil de détection maximal S_0, et une variable MSG à 0. On comprendra plus bas le rôle de la variable MSG.

La phase de détection comporte ensuite une étape d'attente (étape E102) et une étape de mesure (étape E103) .

L'étape d'attente est destinée à retarder d'un temps de retard la mise en œuvre de l'étape de mesure.

Le temps de retard est compté à partir d'un moment où un niveau du signal ultrasonore de mesure généré au cours d'une phase de mesure précédente devient inférieur à un seuil de silence prédéterminé.

Le temps de retard est ici égal à 15ms.

Le niveau du signal ultrasonore de mesure généré au cours de la phase de mesure précédente est mesuré à la fois par le premier transducteur 2a agissant comme récepteur et par le deuxième transducteur 2b agissant comme récepteur.

Ainsi, suite au temps de retard, le niveau de signal ultrasonore mesuré et généré volontairement, au cours de la phase de mesure précédente, est presque nul.

La phase de détection comporte ensuite une étape au cours de laquelle le premier transducteur 2a (ou bien le deuxième transducteur 2b) joue le rôle d'un récepteur (E103)

Le récepteur acquiert le niveau de signal ultrasonore présent dans l'eau alors qu'aucun signal ultrasonore de mesure n'est généré. Les moyens de traitement mesurent alors ce signal sonore « parasite » présent dans l'eau, et comparent le niveau du signal ultrasonore parasite avec la valeur courante du seuil de détection S_n (étape E104). La valeur courante du seuil de détection est à ce moment égale à S_0.

Si le niveau de signal ultrasonore parasite est inférieur à la valeur courante du seuil de détection S_n, la présence d'une perturbation n'est pas détectée.

L'indice n est alors incrémenté : l'indice n devient égal à 1, et la valeur courante du seuil de détection devient égale à SI (étape E105).

L'indice n est alors comparé avec la valeur N (étape E106).

Si n atteint la valeur N, la phase de détection s'achève sans qu'une perturbation ne soit détectée (étape E107). Sinon, la phase de détection reprend à l'étape E102.

Par contre, au cours de l'étape E104, lorsque le niveau de signal ultrasonore parasite mesuré devient supérieur ou égal à une valeur courante limite du seuil de détection S_1, une perturbation est détectée.

On compare alors l'indice I de la valeur courante limite du seuil de détection S_I avec un seuil d'indice prédéfini K (E108).

Si l'indice I de la valeur courante limite du seuil de détection S_I est supérieur au seuil d'indice prédéfini K, cela signifie que la valeur courante limite du seuil de détection S_I est relativement faible et donc que le niveau du signal ultrasonore parasite est relativement faible. On en déduit que la perturbation correspond à une anomalie.

La variable MSG prend alors la valeur 1 (étape E109).

Au contraire, si l'indice I de la valeur courante limite du seuil de détection S_I est inférieur ou égal au seuil d'indice prédéfini K, cela signifie que la valeur courante limite du seuil de détection S_I est élevée et donc que le niveau du signal ultrasonore parasite est élevé. On en déduit que la perturbation correspond à une tentative de fraude.

La variable MSG prend alors la valeur 2 (étape E110).

La phase de détection comporte ensuite une étape de transmission d'un message d'alerte qui dépend de la valeur de la variable MSG (étape E111). Si la variable MSG est égale à 1, le message d'alerte est un message d'anomalie et, si la variable MSG est égale à 2, le message est un message de fraude.

Le message d'alerte est transféré à une « entité », qui est par exemple un fournisseur d'eau, un gestionnaire du réseau d'eau, un opérateur quelconque, un client consommateur de l'eau.

Le message d'alerte est transmis par courants porteurs en ligne ou par tout autre type de moyen de communication (filaire ou sans fil). Dans le cas où des courants porteurs en ligne sont choisis, les couches applicatives DLMS et COSEM sont avantageusement utilisées.

Dans ce cas, un exemple de message d'alerte est par exemple :

```
<EventNotificationRequest>
 <AttributeDescriptor>
   <ClassldValue="0001" />
   <InstanceldValue="0000616200FF" />
   <AttributeldValue="02" />
 </AttributeDescriptor>
 <AttributeValue>
   <DoubleLongUnsignedValue="00000001" />
 </AttributeValue>
</EventNotificationRequest>
```

L'encodage associé à l'alarme correspondante est : C20000010000616200FF020600000001.

On peut prévoir, au cours de la phase de détection, d'émettre un signal ultrasonore leurre, et de tenter de détecter un signal ultrasonore frauduleux émis en réponse au signal ultrasonique leurre. En effet, il existe des générateurs ultrasonores très perfectionnés, susceptibles d'être utilisés à des fins frauduleuses, qui tentent de se synchroniser sur des émissions de signaux ultrasonores de mesure pour les perturber.

Pour contrer ce type de fraude, on émet le signal leurre pendant une courte durée, et on « écoute » si, alors que le signal leurre s'est évanoui, un signal ultrasonore est présent. Un tel signal ultrasonore est alors un signal ultrasonore frauduleux. Un message d'alerte (de type MSG=2) est alors émis.

On note qu'il est possible de prévoir que le seuil d'indice prédéfini K, qui permet de distinguer une anomalie d'une tentative de fraude, soit paramétrable. Le paramétrage peut par exemple dépendre de l'heure à laquelle est réalisée la phase de détection. On sait qu'en fin de journée, le réseau de distribution d'eau est beaucoup utilisé, ce qui tend à augmenter la survenue d'anomalies ainsi que le niveau des signaux ultrasonores parasites résultant de ces anomalies. Il peut donc être intéressant de diminuer le seuil d'indice prédéfini K en fin de journée.

Les valeurs prédéfinies S_0,..., S_N-1 que peut prendre le seuil de détection S_n peuvent aussi être paramétrables.

On note aussi que la totalité de la phase de détection n'est pas nécessairement mise en œuvre dans le compteur d'eau.

Il est par exemple parfaitement possible de prévoir de réaliser les mesures du niveau de signal ultrasonore parasite dans le compteur d'eau, et de transmettre ces mesures vers un équipement externe, par exemple un serveur du *Cloud* géré par une entité. Pour chaque phase de détection, les étapes suivant l'étape de mesure sont alors réalisées dans l'équipement externe. L'entité peut alors utiliser ses propres critères pour détecter et évaluer la perturbation. L'entité peut par exemple définir elle-même le seuil d'indice prédéfini K qui permet de distinguer une anomalie d'une tentative de fraude.

Bien entendu, l'invention n'est pas limitée au mode de réalisation décrit mais englobe toute variante entrant dans le champ de l'invention telle que définie par les revendications.

L'invention n'est bien sûr pas limitée à la mesure de la vitesse de l'eau, mais s'applique à tout type de fluide (par exemple à un gaz ou au pétrole).

On a décrit ici l'invention dans un compteur d'eau à ultrason comprenant un premier type de dispositif de mesure (*classical pipe*), mais l'invention peut être mise en œuvre avec tout autre type de dispositif de mesure ultrasonore, et notamment avec le deuxième type de dispositif de mesure et avec le troisième type de dispositif de mesure présentés plus tôt. Tout type de trajet de longueur définie peut être utilisé, avec tout type de réflecteur, tout type de miroir, etc.

On a indiqué que chaque phase de détection est réalisée entre deux phases de mesure. Ces phases de mesure ne sont pas nécessairement des phases de mesure successives. De manière générale, les phases de mesure et les phases de détection peuvent être répétées régulièrement ou non, périodiquement ou non.

Toutes les valeurs numériques fournies ici sont utilisées pour illustrer l'invention, et peuvent bien sûr être différentes lors de la mise en œuvre de l'invention.

**Revendications**

1. Procédé de mesure d'une vitesse d'un fluide, comportant des phases de mesure qui comprennent chacune les étapes :

   - de générer une pluralité de fréquences d'émission pseudo-aléatoires (fus_n) ;
   - pour chaque fréquence d'émission pseudo-aléatoire (fus_n), de produire des mesures de temps de trajet représentatives de temps mis par des signaux ultrasonores de mesure, émis à ladite fréquence d'émission pseudo-aléatoire, pour parcourir un trajet de longueur définie ;
   - pour chaque fréquence d'émission pseudo-aléatoire (fus_n), d'évaluer une précision des mesures de temps de trajet;
   - d'utiliser, pour évaluer la vitesse du fluide, les mesures de temps de trajet produites pour la fréquence d'émission pseudo-aléatoire (fus_k) qui présente la plus grande précision,

   le procédé de mesure étant tel que, pour chaque fréquence d'émission pseudo-aléatoire (fus_n), l'évaluation de la précision des mesures de temps de trajet comporte une étape de calculer une moyenne $M'_{fus\_n}$ des mesures de temps de trajet, et une étape de déterminer un nombre de mesures de temps de trajet imprécises (13) situées à l'extérieur d'une plage $[M'_{fus\_n}-X ; M'_{fus\_n}+X]$, la fréquence d'émission qui présente la plus grande précision étant celle pour laquelle le nombre de mesures de temps de trajet imprécises (13) est le plus faible.

2. Procédé de mesure selon la revendication 1, dans lequel X est compris entre 3% et 30% de $M'_{fus\_n}$.

3. Procédé de mesure selon la revendication 1, dans lequel un temps de trajet moyen utilisé pour évaluer la vitesse du fluide est égal à la moyenne $M_{fus\_k}$ des mesures de temps de trajet à l'intérieur de la plage $[M'_{fus\_k}-X ; M'_{fus\_k}+X]$, fus_k étant la fréquence d'émission qui présente la plus grande précision.

4. Procédé de mesure selon la revendication 1, dans lequel, pour un signal ultrasonore de mesure reçu (Sr), la mesure de temps de trajet est obtenue à partir de la détermination d'un moment de survenue (T1) d'un lobe prédéterminé (12) du signal ultrasonore de mesure reçu.

5. Procédé de mesure selon la revendication 4, dans lequel le moment de survenue est l'instant où survient un front montant du lobe prédéterminé (12).

6. Procédé de mesure selon la revendication 4, dans lequel le lobe prédéterminé est un j[ième] lobe (12) du signal ultrasonore de mesure reçu (Sr) après qu'une amplitude du signal ultrasonore de mesure reçu ait dépassé un seuil d'amplitude prédéterminé (Sa).

**7.** Procédé de mesure selon la revendication 1, dans lequel la génération de la pluralité de fréquences d'émission pseudo-aléatoires (fus_n) utilise un compteur de cycles d'un microcontrôleur.

**8.** Procédé de mesure selon la revendication 1, dans lequel la génération de la pluralité de fréquences d'émission pseudo-aléatoires (fus_n) utilise un polynôme générateur.

**9.** Procédé de mesure selon la revendication 1, dans lequel les fréquences d'émission pseudo-aléatoires (fus_n) sont comprises entre 900kHz et 4MHz.

**10.** Procédé de mesure selon la revendication 1, dans lequel les fréquences d'émission pseudo-aléatoires (fus_n) sont espacées entre elles d'au moins un écart de fréquence prédéfini.

**11.** Procédé de mesure selon la revendication 10, dans lequel l'écart de fréquence prédéfini est compris entre 5kHz et 50kHz.

**12.** Procédé de mesure selon l'une des revendications précédentes, comportant en outre des phases de détection réalisées chacune entre deux phases de mesure, chaque phase de détection comportant les étapes :

    - de mesurer un niveau de signal ultrasonore parasite présent dans le fluide ;
    - de comparer le niveau de signal ultrasonore parasite avec une valeur courante d'un seuil de détection (S_n), le seuil de détection étant susceptible de prendre une pluralité de valeurs prédéfinies comprises entre un seuil de détection maximal (S_0) et un seuil de détection minimal (S_N-1);
    - si le niveau de signal ultrasonore parasite mesuré est inférieur à la valeur courante du seuil de détection (S_n), de réduire la valeur courante du seuil de détection (S_n), et de réitérer l'étape de mesure et l'étape de comparaison ;
    - lorsque le niveau de signal ultrasonore parasite mesuré devient supérieur ou égal à une valeur courante limite du seuil de détection (S_l), de détecter une perturbation et, en fonction de la valeur courante limite du seuil de détection (S_l), de déterminer si la perturbation provient d'une anomalie ou d'une tentative de fraude.

**13.** Procédé de mesure selon la revendication 12, dans lequel les valeurs prédéfinies du seuil de détection sont chacune référencées par un indice (n) et présentent des valeurs décroissantes relativement aux indices (n), et dans lequel on détermine qu'une perturbation provient d'une anomalie si un indice (l) de la valeur courante limite du seuil de détection (S_l) est supérieur à un seuil d'indice prédéfini (K), et on détermine qu'une perturbation provient d'une tentative de fraude si un indice (l) de la valeur courante limite du seuil de détection (S_l) est inférieur ou égal au seuil d'indice prédéfini (K).

**14.** Procédé de mesure selon la revendication 13, dans lequel le seuil d'indice prédéfini (K) est paramétrable.

**15.** Procédé de mesure selon la revendication 14, dans lequel le seuil d'indice prédéfini (K) est paramétrable en fonction de l'heure à laquelle est réalisée la phase de détection.

**16.** Procédé de mesure selon la revendication 12, dans lequel la phase de détection comporte en outre une étape d'attente destinée à retarder d'un temps de retard prédéfini la mise en œuvre de l'étape de mesure.

**17.** Procédé de mesure selon la revendication 16, dans lequel le temps de retard prédéfini est compté à partir d'un moment où un niveau du signal ultrasonore de mesure (Se) généré au cours d'une phase de mesure précédente devient inférieur à un seuil de silence prédéterminé.

**18.** Procédé de mesure selon la revendication 12, dans lequel la phase de détection comporte en outre les étapes d'émettre un signal ultrasonore leurre, et de tenter de détecter un signal ultrasonore frauduleux émis en réponse au signal ultrasonore leurre.

**19.** Procédé de mesure selon la revendication 12, dans lequel la phase de détection comporte en outre l'étape de transmettre à un équipement externe le niveau de signal ultrasonore parasite mesuré.

**20.** Procédé de mesure selon la revendication 19, dans lequel les phases de mesure et l'étape de mesure de chaque phase de détection sont mises en œuvre dans un compteur de fluide à ultrason, et dans lequel les étapes suivant l'étape de mesure de chaque phase de détection sont mises en œuvre dans l'équipement externe.

21. Procédé de mesure selon la revendication 19, dans lequel l'équipement externe est un serveur du *Cloud*.

22. Procédé de mesure selon la revendication 12, dans lequel la phase de détection comporte en outre l'étape de transmettre un message d'alerte lorsqu'une perturbation est détectée.

23. Procédé de mesure selon la revendication 22, dans lequel le message d'alerte est transmis par courants porteurs en ligne.

24. Compteur de fluide à ultrason agencé pour mesurer la vitesse d'un fluide comportant un premier transducteur à ultrason (2a), un deuxième transducteur à ultrason (2b), et des moyens de traitement agencés pour mettre en œuvre le procédé de mesure selon l'une des revendications précédentes.

25. Programme d'ordinateur comprenant des instructions pour mettre en œuvre, par un compteur de fluide à ultrason selon la revendication 24, le procédé de mesure selon l'une des revendications 1 à 23.

26. Moyens de stockage, **caractérisés en ce qu'**ils stockent un programme d'ordinateur comprenant des instructions pour mettre en œuvre, par un compteur de fluide à ultrason selon la revendication 24 le procédé de mesure selon l'une des revendications 1 à 23.

**Patentansprüche**

1. Verfahren zum Messen einer Geschwindigkeit eines Fluids, umfassend Messphasen, die jeweils die Schritte umfassen:

   - Erzeugen einer Vielzahl von pseudozufälligen Sendefrequenzen (fus_n);
   - für jede pseudozufällige Sendefrequenz (fus_n), Durchführen von Laufzeitmessungen, die repräsentativ für die Zeiten sind, die die Ultraschallmesssignale, die mit der genannten pseudozufälligen Sendefrequenz ausgesandt werden, benötigen, um eine Strecke mit definierter Länge zurückzulegen;
   - für jede pseudozufällige Sendefrequenz (fus_n), Evaluieren einer Genauigkeit der Laufzeitmessungen;
   - Verwenden der Laufzeitmessungen, die für die pseudozufällige Sendefrequenz (fus_k), die die höchste Genauigkeit aufweist, durchgeführt werden, um die Geschwindigkeit des Fluids zu evaluieren,

   wobei das Messverfahren derart ist, dass für jede pseudozufällige Sendefrequenz (fus_n) die Evaluierung der Genauigkeit der Laufzeitmessungen einen Schritt des Berechnens eines Mittelwerts $M'_{fus\_n}$ der Laufzeitmessungen umfasst, und einen Schritt des Bestimmens einer Anzahl von ungenauen Laufzeitmessungen (13), die sich außerhalb eines Bereichs $[M'_{fus\_n}-X; M'_{fus\_n}+X]$ befinden, wobei die Sendefrequenz, die die höchste Genauigkeit aufweist, diejenige ist, für die die Anzahl der ungenauen Laufzeitmessungen (13) die niedrigste ist.

2. Messverfahren nach Anspruch 1, bei dem X zwischen 3% und 30% von $M'_{fus\_n}$ liegt.

3. Messverfahren nach Anspruch 1, bei dem eine mittlere Laufzeit, die zum Evaluieren der Geschwindigkeit des Fluids verwendet wird, gleich dem Mittelwert $M_{fus\_k}$ der Laufzeitmessungen innerhalb des Bereichs $[M'_{fus\_k}-X; M'_{fus\_k}+X]$ ist, wobei fus_k die Sendefrequenz ist, die die höchste Genauigkeit aufweist.

4. Messverfahren nach Anspruch 1, bei dem für ein empfangenes Ultraschallmesssignal (Sr) die Laufzeitmessung auf Basis der Bestimmung eines Zeitpunkts eines Auftretens (T1) einer vorbestimmten Keule (12) des empfangenen Ultraschallmesssignals erhalten wird.

5. Messverfahren nach Anspruch 4, bei dem der Zeitpunkt des Auftretens der Moment ist, an dem eine steigende Flanke der vorbestimmten Keule (12) auftritt.

6. Messverfahren nach Anspruch 4, bei dem die vorbestimmte Keule eine j-te Keule (12) des empfangenen Ultraschallmesssignals (Sr) ist, nachdem eine Amplitude des empfangenen Ultraschallmesssignals einen vorbestimmten Amplitudenschwellenwert (Sa) überschritten hat.

7. Messverfahren nach Anspruch 1, bei dem die Vielzahl von pseudozufälligen Sendefrequenzen (fus_n) unter Verwendung eines Zykluszählers eines Mikrocontrollers erzeugt wird.

8. Messverfahren nach Anspruch 1, bei dem die Vielzahl von pseudozufälligen Sendefrequenzen (fus_n) unter Verwendung eines Polynomerzeugers erzeugt wird.

9. Messverfahren nach Anspruch 1, bei dem die pseudozufälligen Sendefrequenzen (fus_n) zwischen 900kHz und 4MHz liegen.

10. Messverfahren nach Anspruch 1, bei dem die pseudozufälligen Sendefrequenzen (fus_n) zueinander um mindestens eine vordefinierte Frequenzdifferenz beabstandet sind.

11. Messverfahren nach Anspruch 10, bei dem die vordefinierte Frequenzdifferenz zwischen 5kHz und 50kHz liegt.

12. Messverfahren nach einem der vorhergehenden Ansprüche, umfassend ferner Detektionsphasen, die jeweils zwischen zwei Messphasen durchgeführt werden, wobei jede Detektionsphase die Schritte umfasst:

   - Messen eines Pegels eines Ultraschall-Störsignals, das in dem Fluid vorhanden ist;
   - Vergleichen des Pegels des Ultraschall-Störsignals mit einem aktuellen Wert eines Detektionsschwellenwerts (S_n), wobei der Detektionsschwellenwert eine Vielzahl von vordefinierten Werten annehmen kann, die zwischen einem maximalen Detektionsschwellenwert (S_0) und einem minimalen Detektionsschwellenwert (S_N-1) liegen;
   - wenn der gemessene Pegel des Ultraschall-Störsignals niedriger als der aktuelle Wert des Detektionsschwellenwerts (S_n) ist, Abziehen des aktuellen Werts von dem Detektionsschwellenwert (S_n) und Wiederholen des Messschritts und des Vergleichsschritts;
   - wenn der gemessene Pegel des Ultraschall-Störsignals größer oder gleich einem aktuellen Grenzwert (S_I) des Detektionsschwellenwerts wird, Erfassen einer Störung und, in Abhängigkeit von dem aktuellen Grenzwert (S_I) des Detektionsschwellenwerts, Bestimmen, ob die Störung von einer Anomalie oder einem Betrugsversuch stammt.

13. Messverfahren nach Anspruch 12, bei dem die vordefinierten Werte des Detektionsschwellenwertes jeweils durch einen Index (n) referenziert sind und Werte aufweisen, die relativ zu den Indizes (n) abnehmen, und bei dem man bestimmt, dass eine Störung von einer Anomalie stammt, wenn ein Index (I) des aktuellen Grenzwerts (S_I) des Detektionsschwellenwerts größer als ein vordefinierter Indexschwellenwert (K) ist, und man bestimmt, dass eine Störung von einem Betrugsversuch stammt, wenn ein Index (I) des aktuellen Grenzwerts (S_I) des Detektionsschwellenwerts kleiner oder gleich einem vordefinierten Indexschwellenwert (K) ist.

14. Messverfahren nach Anspruch 13, bei dem der vordefinierte Indexschwellenwert (K) parametrierbar ist.

15. Messverfahren nach Anspruch 14, bei dem der vordefinierte Indexschwellenwert (K) in Abhängigkeit von der Zeit, zu der die Detektionsphase durchgeführt wird, parametrierbar ist.

16. Messverfahren nach Anspruch 12, bei dem die Detektionsphase ferner einen Warteschritt umfasst, der dazu bestimmt ist, das Durchführen des Messschritts um eine vordefinierte Verzögerungszeit zu verzögern.

17. Messverfahren nach Anspruch 16, bei dem die vordefinierte Verzögerungszeit ab einem Zeitpunkt gezählt wird, ab dem ein Pegel des Ultraschallmesssignals (Se), das während einer vorherigen Messphase erzeugt wird, kleiner als ein vorbestimmter Schweige-Schwellenwert wird.

18. Messverfahren nach Anspruch 12, bei dem die Detektionsphase ferner die Schritte des Sendens eines Köder-Ultraschallsignals und des Versuchens des Erfassens eines Betrugs-Ultraschallsignals umfasst, das in Antwort auf das Köder-Ultraschallsignal gesendet wird.

19. Messverfahren nach Anspruch 12, bei dem die Detektionsphase ferner den Schritt des Übertragens des gemessenen Pegels des Ultraschall-Störsignals an eine externe Ausrüstung umfasst.

20. Messverfahren nach Anspruch 19, bei dem die Messphasen und der Messschritt jeder Detektionsphase in einem Ultraschall-Fluidzähler durchgeführt werden, und bei dem die Schritte, die auf den Messschritt jeder Detektionsphase folgen, in der externen Ausrüstung durchgeführt werden.

21. Messverfahren nach Anspruch 19, bei dem die externe Ausrüstung ein Server der *Cloud* ist.

22. Messverfahren nach Anspruch 12, bei dem die Detektionsphase ferner den Schritt des Übertragens einer Warnmeldung umfasst, wenn eine Störung detektiert wird.

23. Messverfahren nach Anspruch 22, bei dem die Warnmeldung mittels Powerline-Kommunikation übertragen wird.

24. Ultraschall-Fluidzähler, der ausgebildet ist, um die Geschwindigkeit eines Fluids zu messen, umfassend einen ersten Ultraschall-Wandler (2a), einen zweiten Ultraschall-Wandler (2b) und Verarbeitungsmittel, die ausgebildet sind, um das Messverfahren nach einem der vorhergehenden Ansprüche durchzuführen.

25. Computerprogramm, umfassend Anweisungen zum Durchführen des Messverfahrens nach einem der Ansprüche 1 bis 23 mittels eines Ultraschall-Fluidzählers nach Anspruch 24.

26. Speichermittel, die **dadurch gekennzeichnet sind, dass** sie ein Computerprogramm speichern, das Anweisungen zum Durchführen des Messverfahrens nach einem der Ansprüche 1 bis 23 mittels eines Ultraschall-Fluidzählers nach Anspruch 24 umfasst.

## Claims

1. A method of measuring the speed of a fluid, the method comprising measurement stages, each comprising the following steps:

   • generating a plurality of pseudorandom emission frequencies (fus_n);
   • for each pseudorandom emission frequency (fus_n), producing travel time measurements representative of times taken by ultrasound measurement signals emitted at said pseudorandom emission frequency to travel along a path of defined length;
   • for each pseudorandom emission frequency (fus_n), evaluating the accuracy of the travel time measurements;
   • for evaluating the speed of the fluid, making use of the travel time measurements produced for the pseudorandom emission frequency (fus_k) that presents the greatest accuracy;
   • the measurement method being such that, for each pseudorandom emission frequency (fus_n), evaluating the accuracy of the travel time measurements comprises a step of calculating a mean $M'_{fus\_n}$ of the travel time measurements, and a step of determining a number of inaccurate travel time measurements (13) lying outside a range $[M'_{fus\_n}-X, M'_{fus\_n}+X]$, the emission frequency that presents the greatest accuracy being the frequency for which the number of inaccurate travel time measurements (13) is the lowest.

2. A measurement method according to claim 1, wherein X lies in the range 3% to 30% of $M'_{fus\_n}$.

3. A measurement method according to claim 1, wherein a mean travel time used for evaluating the speed of the fluid is equal to the mean $M_{fus\_k}$ of the travel time measurements within the range $[M'_{fus\_k}-X, M'_{fus\_k}+X]$, fus_k being the emission frequency that presents the greatest accuracy.

4. A measurement method according to claim 1, wherein for a received ultrasound measurement signal (Sr), the travel time measurement is obtained on the basis of determining a moment of arrival (T1) for a predetermined lobe (12) of the received ultrasound measurement signal.

5. A measurement method according to claim 4, wherein the moment of arrival is the instant at which a rising front of the predetermined lobe (12) arrives.

6. A measurement method according to claim 4, wherein the predetermined lobe is a $j^{th}$ lobe (12) of the received ultrasound measurement signal (Sr) after the received ultrasound measurement signal presents an amplitude that exceeds a predetermined amplitude threshold (Sa).

7. A measurement method according to claim 1, wherein the plurality of pseudorandom emission frequencies (fus_n) are generated by making use of a cycle counter of a microcontroller.

8. A measurement method according to claim 1, wherein the plurality of pseudorandom emission frequencies (fus_n) are generated by making use of a generator polynomial.

9. A measurement method according to claim 1, wherein the pseudorandom emission frequencies (fus_n) lie in the range 900 kHz to 4 MHz.

10. A measurement method according to claim 1, wherein the pseudorandom emission frequencies (fus_n) are spaced apart from one another by at least a predefined frequency difference.

11. A measurement method according to claim 10, wherein the predefined frequency difference lies in the range 5 kHz to 50 kHz.

12. A measurement method according to any preceding claim, further comprising detection stages, each performed between two measurement stages, each detection stage comprising the following steps:

- measuring an interfering ultrasound signal level present in the fluid;
- comparing the interfering ultrasound signal level with a current value of a detection threshold (S_n), the detection threshold being capable of taking a plurality of predefined values lying between a maximum detection threshold (S_0) and a minimum detection threshold (S_N-1);
- if the measured interfering ultrasound signal level is less than the current value of the detection threshold (S_n), reducing the current value of the detection threshold (S_n), and reiterating the measurement step and the comparison step;
- when the measured interfering ultrasound signal level becomes greater than or equal to a limit current value of the detection threshold (S_1), detecting a disturbance and, as a function of the limit current value of the detection threshold (S_1), determining whether the disturbance comes from an anomaly or from an attempted fraud.

13. A measurement method according to claim 12, wherein each of the predefined values of the detection threshold is referenced by an index (n) presenting values that decrease with increasing index (n), and wherein a disturbance is determined as coming from an anomaly if the index (1) of the limit current value of the detection threshold (S_1) is greater than a predefined index threshold (K), and a disturbance is determined as coming from an attempted fraud if the index (1) of the limit current value of the detection threshold (S_l) is less than or equal to the predefined index threshold (K).

14. A measurement method according to claim 13, wherein the predefined index threshold (K) is adjustable.

15. A measurement method according to claim 14, wherein the predefined index threshold (K) is adjustable as a function of the time of day at which the detection stage is performed.

16. A measurement method according to claim 12, wherein the detection stage also includes a waiting step for delaying performance of the measurement step by a predefined delay time.

17. A measurement method according to claim 16, wherein the predefined delay time is measured on the basis of a moment when the level of the ultrasound measurement signal (Se) generated during a preceding measurement stage has become lower than a predetermined silence threshold.

18. A measurement method according to claim 12, wherein the detection stage also includes steps of emitting a decoy ultrasound signal, and of attempting to detect a fraudulent ultrasound signal emitted in response to the decoy ultrasound signal.

19. A measurement method according to claim 12, wherein the detection stage also includes the step of transmitting the measured level of the interfering ultrasound signal to external equipment.

20. A measurement method according to claim 19, wherein the measurement stages and the measurement step in each detection stage are performed in an ultrasound fluid meter, and wherein the steps following the measurement step of each detection stage are performed in the external equipment.

21. A measurement method according to claim 19, wherein the external equipment is a server in the "cloud".

22. A measurement method according to claim 12, wherein the detection stage also includes the step of transmitting a warning message when a disturbance is detected.

**23.** A measurement method according to claim 22, wherein the warning message is transmitted by powerline carrier.

**24.** An ultrasound fluid meter arranged to measure the speed of a fluid, comprising a first ultrasonic transducer (2a), a second ultrasonic transducer (2b), and processor means arranged to perform the measurement method according to any preceding claim.

**25.** A computer program including instructions for enabling an ultrasound fluid meter according to claim 24 to perform the measurement method according to any one of claims 1 to 23.

**26.** Storage means **characterized in that** they store a computer program including instructions for enabling an ultrasound fluid meter according to claim 24 to perform the measurement method according to any one of claims 1 to 23.

**Fig. 1**

EP 3 593 148 B1

**Fig. 2**

Fig. 3

Fig. 4

Mesures de temps
de trajet

Fig. 6

Instants de chacune
des 80 mesures

**Fig. 5**

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2013246065 A